# NOUVEAU FASCICULE DE BREVET EUROPEEN

(11) **EP 1 380 811 B2**
(45) Date de publication et mention de la décision concernant l'opposition: **07.08.2013**
(45) Mention de la délivrance du brevet: 13.08.2008
(21) Numéro de dépôt: 02405556.8
(22) Date de dépôt: 03.07.2002
(51) Int. Cl.: G01C 3/10, G02B 7/28

(54) **Dispositif optique de mesure de distances**
Optische Abstandsmessvorrichtung
Optical distance measuring device

(43) Date de publication de la demande: 14.01.2004
(73) Titulaire: Optosys SA, 1762 Givisiez (CH)
(72) Inventeur: Rheme, Charles, 1725 Posieux (CH); Heimlicher, Peter, 1700 Fribourg (CH)
(74) Mandataire: Seehof, Michel

(56) Documents cités:
- EP-A- 0 419 082
- EP-A- 0 843 155
- WO-A-98/21550
- DE-A1- 4 211 875
- DE-A1- 10 003 691
- DE-A1- 10 059 156
- DE-C2- 19 808 215
- US-A- 4 976 543
- KATALOG "SENSICK", 2001, SICK AG pages 486 - 493

## Description

La présente invention porte sur un dispositif optique de détection ou de mesure de distance selon le préambule de la revendication 1.

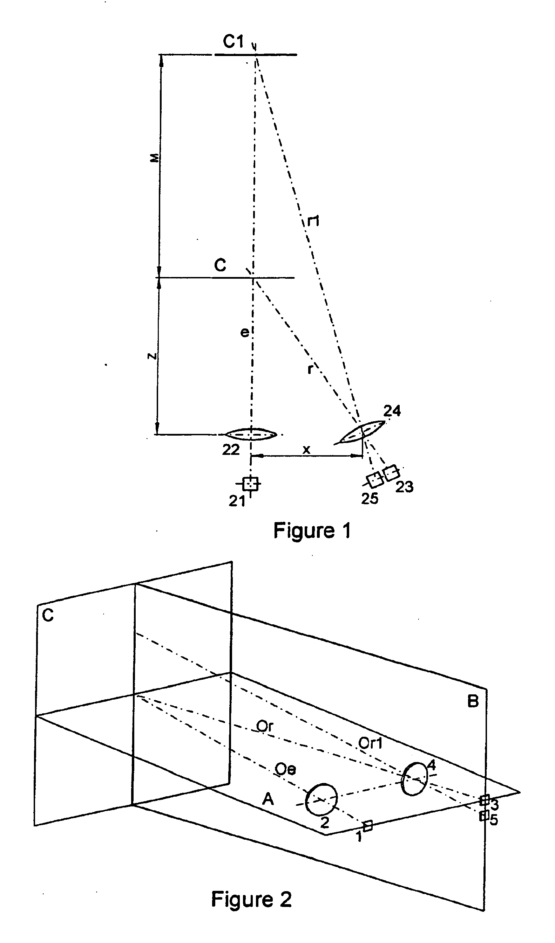

Les dispositifs avec capteurs optiques à réflexion avec suppression d'arrière-plan ou de mesure de distances utilisent en général le principe de la triangulation décrit par la figure 1. Un bon fonctionnement du capteur est affecté au―delà d'une distance maximale du fait que la sensibilité angulaire diminue avec la distance. Lorsque l'on cherche à augmenter cette distance, on observe l'accroissement de la zone morte qui exclut le fonctionnement à proximité du capteur.

Afin d'adapter cette plage de mesures limitée à des situations variées, certains constructeurs utilisent un miroir ajustable qui permet d'adapter au mieux le domaine de mesure. Une telle solution est décrite, par exemple, dans le brevet US 3 759 614.

D'autres solutions sont connues: Différents documents, tels que GB-A-2 069 286 et DE-A-196 19 308 proposent une émission sous forme d'impulsions et une analyse de deux canaux de réception. DE-A-24 55 733 utilise alternativement deux optiques d'éclairage situées dans le même plan. DE-C-40 04 530, DE-C-40 40 225, DE-C-41 40 614 ainsi que DE-C-198 08 215 proposent de grouper dans le même canal optique d'émission plusieurs sources lumineuses émettant alternativement. Le canal de réception est constitué par des détecteurs multiples ou un détecteur sensible à la position, par exemple PSD, le circuit électronique étant capable de traiter les signaux correspondant à chacune des sources lumineuses et d'en extraire une information sur la distance à la cible. Un traitement sophistiqué de ces informations permet d'étendre légèrement la portée du système de mesure.

Cependant, les limitations inhérentes au principe de triangulation entre des éléments situés dans un même plan défini par les axes optiques des systèmes d'émission et de réception ne permettent pas d'améliorer beaucoup les performances de distance, de linéarité et de zone morte. Ainsi, dans le cas d'un capteur de mesure ou à suppression d'arrière-plan par triangulation, si l'on calcule le rapport entre la distance de détection maximale et la distance minimale de la plage de mesure, on obtient un chiffre de qualité qui ne dépasse que rarement la valeur 5. D'autre part, ces détecteurs restent très souvent sensibles à la quantité de lumière réfléchie par la cible qui dépend de sa texture et de sa couleur.

Partant de cet état de la technique, un premier but de cette invention est d'améliorer sensiblement les résultats des mesures par triangulation, sans devoir recourir à des circuits d'analyse complexes. Ce but est atteint par le dispositif selon

La revendication indépendante 1.

L'invention sera expliquée en détail en se référant aux dessins ci-annexés.
- La figure 1: montre schématiquement le principe de mesure par triangulation connu,
- la figure 2: décrit la disposition des éléments de mesure selon l'invention,
- la figure 3: identifie les valeurs mesurées en fonction de la distance,
- les figures 3A-3C: sont des coupes selon C-C, C1-C1 et C2-C2 de la figure 3,
- la figure 4: démontre les performances de l'invention,
- la figure 5: décrit schématiquement une solution simple d'un dispositif selon l'invention,
- la figure 6: présente la réalisation d'un capteur compact,
- La figure 6A: est une coupe selon la ligne F-F du capteur de la figure 6.

Dans la figure 1, qui représente le principe de mesure par triangulation connu, on aperçoit la source lumineuse 21 et l'optique d'émission 22 qui projettent le faisceau sur la cible à mesurer C, définissant l'axe de l'optique d'émission e. La lumière provenant de la réflexion diffusante de la cible C est focalisée par la lentille 24 sur le récepteur 23. Ces deux éléments définissent l'axe de référence r du système de réception. Les axes des optiques d'émission e et de réception r définissent un plan dans lequel sont situés tous les éléments de ce système de mesure par triangulation.

Ainsi, un récepteur supplémentaire 25 est placé à proximité du récepteur de référence. Il détermine un nouvel axe de réception r1 également compris dans le même plan, qui délimite la plage de mesure jusqu'à C1.

Le système de détection est ainsi constitué par un assemblage de deux ou plusieurs détecteurs, cette fonction de détection pouvant aussi être réalisée par un détecteur sensible à la position par exemple PSD. Le circuit électronique qui traite les signaux fournis par les détecteurs peut déterminer la position de l'impact lumineux et en déduire l'information de la distance à mesurer.

Les performances d'un tel arrangement dépendent du nombre et de l'espacement des détecteurs ainsi que de leur position par rapport à l'optique d'émission. En considérant la base X, définie comme la distance entre les optiques d'émission et de réception, on constate que la plage de mesure M est limitée et la zone morte Z est importante. La linéarité est affectée par la sensibilité des détecteurs à la variation angulaire du faisceau incident qui diminue lorsque la distance à la cible augmente.

La présente invention établit une autre disposition des détecteurs. La figure 2 représente le nouvel arrangement. On y reconnaît la source lumineuse 1 et la lentille du canal d'émission 2 qui définissent l'axe optique du système d'émission Oe. Le détecteur de référence 3 et la lentille 4 définissent l'axe de référence du système de réception Or. Ces deux axes des systèmes d'émission et de réception déterminent le plan de référence A. Le plan C représente la cible que l'on souhaite détecter ou dont on désire mesurer l'éloignement.

Il sera démontré que si un détecteur 5 supplémentaire, déterminant un nouvel axe de réception Or1, est contenu dans un plan B présentant une inclinaison α par rapport au plan de référence A, les intensités mesurées par les détecteurs vont permettre d'obtenir une information bien linéaire en fonction de la distance, et cela sur une large plage de mesure. La valeur optimale de l'inclinaison α est de 90°, mais toute autre inclinaison α, comprise entre 10° et 170° est avantageuse. Dans le texte on se refera à 90°, étant sous-entendu qu'il peut s'agir d'autres angles α.

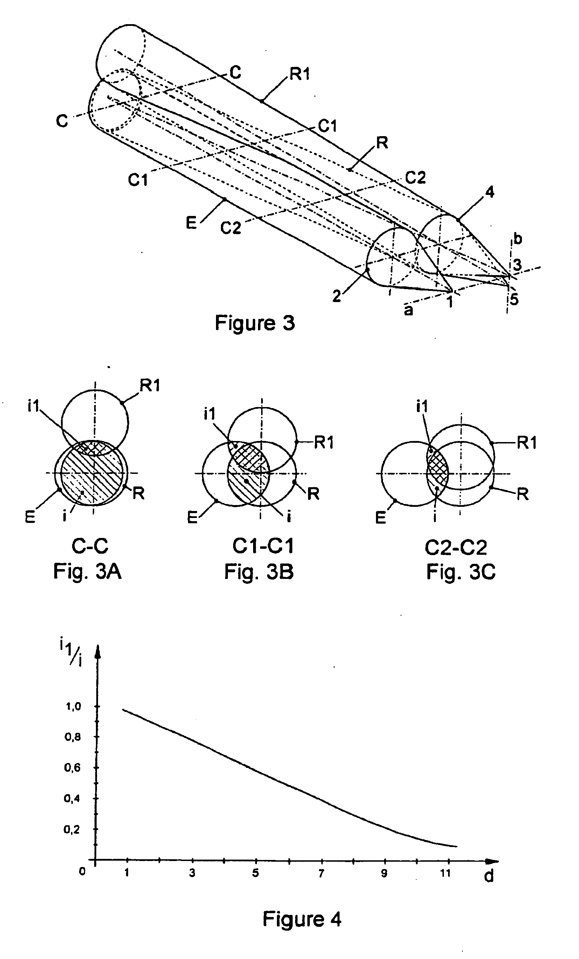

La figure 3 schématise les enveloppes des faisceaux de l'arrangement proposé. On y voit l'enveloppe E du faisceau d'émission idéalisé dans le cas d'une focalisation à grande distance de la source 1 et de la lentille 2. A partir de la lentille 2, l'enveloppe est cylindrique. Les enveloppes des faisceaux de réception R et R1 sont aussi représentées sous forme cylindrique. La source d'émission 1 et le récepteur de référence 3 sont contenus dans le plan principal et sont alignés selon l'axe a, alors que les deux récepteurs 3 et 5 sont alignés selon un axe b qui est perpendiculaire par rapport à l'axe a.

Les figures 3A à 3C représentent, pour trois positions de la cible, les intersections des trois faisceaux et permettent, par un calcul de surface, de mettre en évidence les rapports entre les intensités lumineuses mesurées par les deux récepteurs.

Si l'on calcule le rapport entre l'intensité du faisceau de réception principal i et celle du faisceau secondaire i1, que l'on représente ce rapport en fonction de la distance d mesurée entre le détecteur et la cible, on obtient le diagramme de la figure 4. On constate que ce rapport i1/i varie linéairement sur une grande partie du domaine de mesure. En calculant le rapport entre la distance maximale et la zone morte, comme défini précédemment dans la description, on obtient un chiffre de qualité qui peut atteindre la valeur 10. Le diagramme de la figure 4 nous montre bien que le premier but de cette invention est atteint, à savoir l'amélioration des résultats de mesure par triangulation, soit une grande plage de mesure, une très faible zone morte et une bonne linéarité.

Pour pouvoir obtenir ces résultats, il est important que les courbes enveloppes des faisceaux soient aussi cylindriques que possible. Ceci doit être le cas sur la distance correspondant à la plage de mesure. Pour cela, il faudra tenir compte des dimensions réelles et non ponctuelles de la source et des détecteurs. Les distances entre ces éléments et les lentilles devront être adaptées aux focales de façon que les faisceaux remplissent au mieux cette condition de cylindricité.

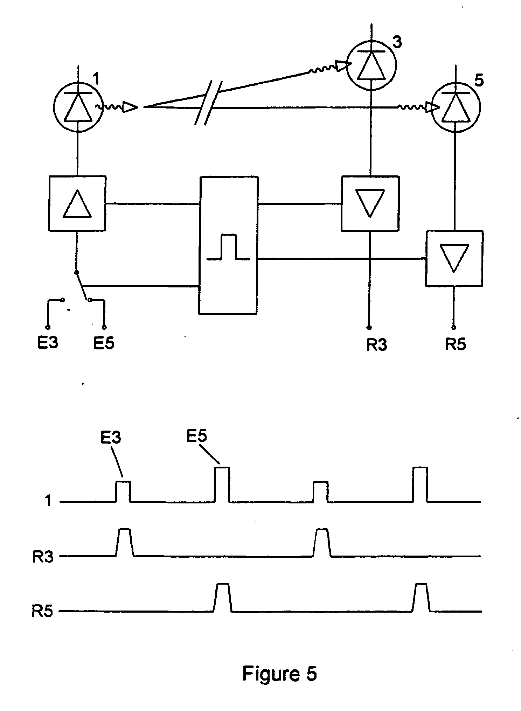

Un dispositif réalisé selon ce principe, avec une LED d'émission et deux photodiodes de réception, est proposé et décrit schématiquement par la figure 5, comme exemple d'une solution simple. Les impulsions lumineuses sont émises par la LED 1, alternativement à l'intention de chacune des photodiodes 3 et 5. Dans cet exemple d'exécution, les photodiodes sont alignées selon un axe perpendiculaire au plan défini par l'axe d'émission et l'axe de référence de réception. Les intensités d'émission alternatives E3 et E5 sont régulées de façon que les signaux R3 et R5 mesurés par chacun des récepteurs soient d'amplitudes relatives identiques ou selon une fonction prédéterminée. L'information sur la distance sera alors fournie par le rapport des intensités des lumières émises E3 et E5. Cette manière de faire offre l'avantage supplémentaire d'une très bonne insensibilité de ce dispositif à la couleur de la cible.

Le principe décrit selon lequel les intensités d'émission alternatives E3 et E5 sont régulées de façon que les signaux R3 et R5 mesurés par chacun des récepteurs soient d'amplitudes relatives identiques ou selon une fonction prédéterminée, s'applique aussi bien sur un dispositif optique où les photodiodes se trouvent dans le même plan que la diode d'émission, ou dans un plan incliné.

Pourtant, l'avantage de ce principe combiné avec l'avantage du plan incliné résulte en un dispositif particulièrement avantageux.

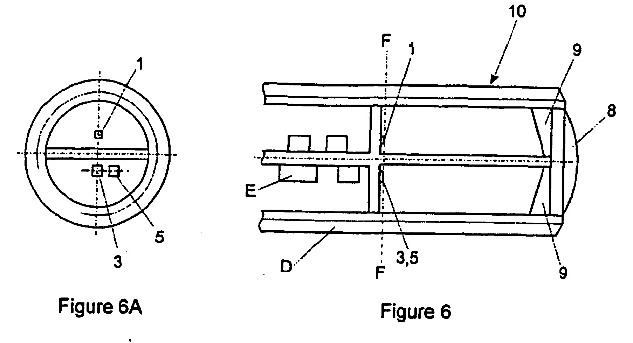

Un exemple d'un capteur compact adapté pour réaliser un dispositif selon la figure 5 est décrit par la figure 6. Le capteur 10 comprend un petit boîtier D, comportant la partie optique et les circuits électroniques E . On y reconnaît la LED d'émission 1, les deux photodiodes 3 et 5 orientées selon un axe perpendiculaire. On y voit le principe des optiques d'émission et de réception qui utilisent la même lentille 8. Ceci est rendu possible par les deux prismes 9, assemblés à l'arrière de la lentille, qui permettent une séparation spatiale des faisceaux d'émission et de réception. Ce dernier principe s'applique aussi bien sur un dispositif optique où les photodiodes se trouvent dans le même plan que la diode d'émission, ou dans un plan incliné. Un tel capteur compact peut être réalisé et utilisé dans d'autres dispositifs de mesures de distance avec un émetteur ou plusieurs émetteurs et un récepteur ou plusieurs récepteurs connus.

Les solutions selon les figures 5 et 6 démontrent que le deuxième but de cette invention est atteint, à savoir la réalisation d'un capteur de petites dimensions intégrant les ensembles optiques et électroniques nécessaires à son fonctionnement. Cette invention permet donc bien d'améliorer les performances des capteurs actuels en conservant leur taille, elle permet aussi de réaliser des capteurs plus petits et plus performants.

La démonstration des performances qui vient d'être faite, avec un système de mesure basé sur un émetteur et deux détecteurs, peut être étendue à un plus grand nombre de détecteurs et aussi à un détecteur sensible à la position, par exemple PSD, dont l'axe de sensibilité serait orienté soit dans le plan A défini par l'axe d'émission et l'axe de réception de référence, ou incliné d'un angle α, de préférence 90°, par rapport a ce plan A .

## Revendications

1. Dispositif optique de détection ou de mesure de distance, comportant une source lumineuse (1) avec une optique d'émission (2) pour projeter un faisceau lumineux selon un axe (Oe) sur une cible à mesurer (C) et un premier récepteur (3) définissant l'axe de réception (Or) contenu dans le même plan de référence (A) que l'axe d'émission (Oe), le dispositif comprenant au moins un deuxième récepteur (5) aligné avec le premier récepteur (3) selon un axe (Or1) contenu dans un plan (B) incliné d'un angle (α) par rapport au plan de référence (A), cet angle étant compris entre 10° et 170° **caractérisé en ce que** la source lumineuse (1) émet des impulsions lumineuses avec des intensités différentes (E3, E5), destinées alternativement à chacun des récepteurs (3, 5), les intensités émises étant régulées de façon à produire sur les récepteurs des signaux (R3, R5) d'amplitudes identiques ou selon une fonction prédéterminée.

2. Dispositif selon la revendication 1 **caractérisé en ce qu'**il comporte, comme système de réception, un détecteur sensible à la position (PSD).

3. Dispositif selon l'une des revendications 1 à 2, **caractérisé en ce qu'**il comprend un capteur (10) avec une seule lentille (8) avec des secteurs distincts d'émission et de réception, chaque secteur possédant un prisme (9) qui focalise les faisceaux lumineux soit sur les éléments d'émission (1, 7), soit sur les éléments de réception (3, 5) .

4. Dispositif selon la revendication 1, **caractérisé en ce que** le système de réception comprend plus de deux récepteurs.

5. Dispositif selon l'une des revendications 1 à 4, comportant un groupe avec plusieurs récepteurs et un groupe avec plusieurs émetteurs, chaque groupe étant aligné selon un axe contenu dans des plans (B), chacun des plans pouvant présenter sa propre inclinaison (α) par rapport aun plan (A)

## Patentansprüche

1. Optische Abstandserfassungs- oder -messvorrichtung mit einer Lichtquelle (1) mit einer Sendeoptik (2) zum Projizieren eines Lichtstrahls entlang einer Achse (Oe) auf ein zu messendes Ziel (C) und einem ersten Empfänger (3), der die in der gleichen Bezugsebene (A) wie die Sendeachse (Oe) enthaltene Empfangsachse (Or) definiert, wobei die Vorrichtung mindestens einen zweiten Empfänger (5) aufweist, der mit dem ersten Empfänger (3) in einer Achse (Or1) ausgerichtet ist, die in einer gegenüber der Bezugsebene (A) um einen Winkel (α) geneigten Ebene (B) enthalten ist, wobei dieser Winkel zwischen 10° und 170° liegt, **dadurch gekennzeichnet, dass** die Lichtquelle (1) Lichtimpulse unterschiedlicher Intensität (E3, E5) aussendet, die abwechselnd für je einen der Empfänger (3, 5) bestimmt sind, wobei die ausgesendeten Intensitäten derart geregelt sind, dass auf den Empfängern Signale (R3, R5) gleicher Amplitude oder gemäss einer vorgegebenen Funktion erzeugt werden.

2. Vorrichtung nach Anspruch 1, **dadurch gekennzeichnet, dass** sie als Empfangssystem einen positionsempfindlichen Detektor (PSD) aufweist.

3. Vorrichtung nach einem der Ansprüche 1 bis 2, **dadurch gekennzeichnet, dass** sie einen Sensor (10) mit nur einer Linse (8) mit gesonderten Sende- und Empfangssektoren aufweist, wobei jeder Sektor ein Prisma (9) besitzt, das die Lichtstrahlen entweder auf die Sendeelemente (1, 7) oder auf die Empfangselemente (3, 5) fokussiert.

4. Vorrichtung nach Anspruch 1, **dadurch gekennzeichnet, dass** das Empfangssystem mehr als zwei Empfänger aufweist.

5. Vorrichtung nach einem der Ansprüche 1 bis 4, mit einer Gruppe mit mehreren Empfängern und einer Gruppe mit mehreren Sendern, wobei jede Gruppe in einer in Ebenen (B) enthaltenen Achse ausgerichtet ist und jede Ebene ihre eigene Neigung (α) gegenüber der Ebene (A) aufweisen kann.

## Claims

1. Optical distance detecting or measuring device, comprising a light source (1) with an emitter optic (2) for projecting a light beam according to an axis (Oe) onto a target to be measured (C) and a first receiver (3) defining the receiving axis (Or) contained in the same reference plane (A) as the emitting axis (Oe), wherein the device comprises at least a second receiver (5) that is aligned with the first receiver (3) on an axis (Or1) contained in a plane (B) that is inclined at an angle (α) with respect to the reference plane (A), this angle being comprised between 10° and 170°, **characterised in that** the light source (1) emits light pulses of different intensities (E3, E5) that are intended alternatingly for each one of the receivers (3, 5), the emitted intensities being regulated in such a manner as to produce signals (R3, R5) having identical amplitudes or according to a predetermined function on the receivers.

2. Device according to claim 1, **characterised in that** it comprises a position-sensitive detector (PSD) as the receiving system.

3. Device according to one of claims 1 to 2, **characterised in that** it comprises a sensor (10) with a single lens (8) with distinct emitting and receiving sectors, each sector having a prism (9) that focuses the light beams either on the emitting elements (1, 7) or on the receiving elements (3, 5).

4. Device according to claim 1, **characterised in that** the receiving system comprises more than two receivers.

5. Device according to one of claims 1 to 4, comprising a group of several receivers and a group of several emitters, each group being aligned on an axis contained in planes (B), each one of which may have its own inclination (α) with respect to the plane (A).
